# EUROPÄISCHE PATENTSCHRIFT

(11) **EP 2 895 768 B1**
(45) Veröffentlichungstag und Bekanntmachung des Hinweises auf die Patenterteilung: **27.02.2019**
(21) Anmeldenummer: 13776715.8
(22) Anmeldetag: 07.09.2013
(51) Int. Cl.: F16F 15/08, F16F 1/40, F03D 7/02, F03D 80/70

(54) **ELASTISCHES PENDELLAGER**
ELASTIC SELF-ALIGNING BEARING
PALIER OSCILLANT ÉLASTIQUE

(30) Priorität: 13.09.2012 EP 12006429
(43) Veröffentlichungstag der Anmeldung: 22.07.2015
(73) Patentinhaber: ESM Energie- und Schwingungstechnik Mitsch GmbH, 64646 Heppenheim (DE)
(72) Erfinder: MITSCH, Franz, 64646 Heppenheim (DE); GLANZNER, Sebastian, 64653 Lorsch (DE); HANUS, Karl-Heinz, 69509 Mörlenbach (DE)
(74) Vertreter: Benz, Jürgen
(86) Internationale Anmeldenummer: PCT/EP2013/002688
(87) Internationale Veröffentlichungsnummer: WO 2014/040715

(56) Entgegenhaltungen:
- EP-A2- 2 003 362
- WO-A1-2010/054808

## Beschreibung

Die Erfindung betrifft ein Pendellager, welches aus elastischen insbesondere konusförmigen aber auch zylindrischen oder ellipsoiden Schichtfederelementen aufgebaut ist, die gegebenenfalls durch hydraulische Vorrichtungen in ihrem Steifigkeitsverhalten variiert werden können und konstruktiv im Bereich der Rotornabe bzw. Hauptwelle der Windkraftanlage angeordnet sind. Dadurch eignen sich derartige Lager sowohl zur Verstellung der Rotorblätter als auch zur Reduzierung von unerwünschten durch die Rotorblätter auf die Anlage übertragenen Kräfte. Die erfindungsgemäßen Pendellager eigenen sich für den Einsatz in Ein-, Zwei- oder Mehrblattrotor- Windkraftanlagen, vorzugsweise in Anlagen, welche von einem Zwei-Blatt-Rotor angetrieben werden. Die erfindungsgemäßen Pendellager sind aber auch für den Einsatz in Kupplungen sowie in Antriebsträngen bei Schiffen und Hubschraubern.

In Windenergieanlagen, insbesondere solche, welche anstelle der üblichen 3-Blatt-Rotoren 2-Blatt-Rotoren verwenden, werden oft Pendellager eingesetzt um die Kräfte und Momente aus den Windlasten auf den Antriebsstrang zu reduzieren oder zu eliminieren. Während in Drei-Blatt-Rotor-Systemen durch die gleichmäßige geometrische Aufteilung der Rotorblätter durch Windeinwirkung hervorgerufene ungleiche Massenträgheitsmomente gut beherrschbar sind und nur in Extremsituation auftreten, ist dieses Problem bei Zweiblattrotoranlagen allgegenwärtig.

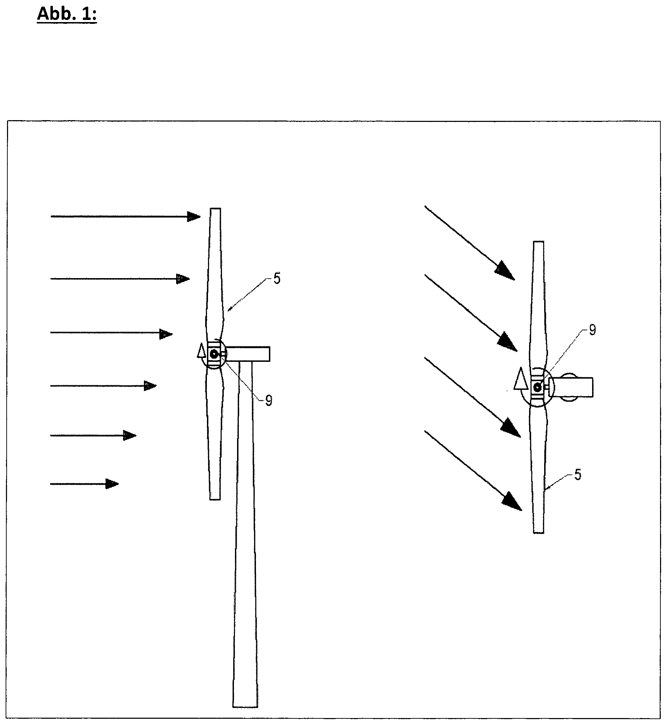

Wie entsprechende Windlasten auf solche Anlagen einwirken können zeigt schematisch Abb. 1. So kann beispielsweise die Windkraft auf ein Rotorblatt deutlich größer sein als auf das andere gegenüberliegende Blatt, was nicht selten bei Durchlauf der Rotorblätter von großen Windkraftanlagen mit hohen Türmen und großem Rotordurchmesser durch die Vertikale eintritt, da der Wind in größerer Höhe zumeist stärker weht als in Bodennähe (Abb. 1, linkes Bild). Ungleiche Windkräfte auf das Zweiblattrotor-System treten aber auch leicht auf, wenn der Wind seitlich weht und der Rotor gerade die Horizontale durchläuft (Abb. 1, rechtes Bild). In beiden Fällen treten ungleichverteilte Massenträgheitsmomente auf, die zwangsläufig auf den Turm und die Anlage als Ganzes übertragen werden und so zu einer verringerten Lebensdauer von einzelnen Komponenten oder gar zu spontanen Schäden führen kann.

Nach dem Stand der Technik werden für ein derartiges Problem oftmals entsprechend angeordnete Konuslager, die als Pendellager fungieren, im Bereich der Hauptwelle und des Rotorsystems eingesetzt, wobei die Windlasten, die ungleichmäßig oder nicht gerade auf die Rotorblättertreffen einwirken, durch die Nachgiebigkeit und Elastizität des Lagers bei dessen Belastung verringert werden.

Dokument EP2 003 362 wird als nächstliegender Stand der Technik angesehen.

Aufgrund der beschriebenen Aufgaben und benötigten Funktionen werden üblicherweise große Konuslager als Pendellager eingesetzt. Bei immer größer werdenden Anlagen gestaltet es sich aber immer schwieriger, solche großen Konuslager aus einem Stück zu vulkanisieren und herzustellen. Außerdem ist es aufwendig und schwierig, diese großen Konuslager vorzuspannen. Ein notwendig gewordener Austausch eines solchen großen und schweren Konuslagers ist überdies sehr aufwendig, da die Rotornabe in der Regel zuerst fixiert werden muss um das Konuslager entfernen zu können. Ferner ist es nicht einfach, den Konuswinkel eines solchen Lagers zu ändern bzw. zu variieren, um mehr Flexibilität in Bezug auf die konstruktive Gesamtsituation des Systems und die möglichen auftretenden Windeinwirkungen zu erhalten. Bei Austausch dieser Lager und Ersatz durch Lager mit anderem Konuswinkel müssen zudem in der Regel entsprechend angepasste andere Vulkanisierwerkzeug hergestellt und bereitgestellt werden.

Es bestand somit die Aufgabe, ein Lager für die beschrieben Zwecke insbesondere für den Einsatz in Windkraftanlagen und vorzugsweise für den Einsatz in Anlagen mit Zweiblattrotoren zur Verfügung zu stellen, welches die unvorteilhaften Eigenschaften der bisherigen technischen Lösungen für diese Problem nicht aufweist, und zudem dem noch mehr Flexibilität bei der Feinabstimmung und Justierung der Rotorblätter, insbesondere in einem Zweiblattrotorsystem ermöglicht.
Die Aufgabe wurde erfindungsgemäß durch neuartige Pendellager entsprechend der Ansprüche und der folgenden Beschreibung gelöst.
Die erfindungsgemäßen Pendellager haben folgende Funktionen zu gewährleisten:
- Drehbarkeit der Rotorblätter(5) um die Pendelachse(3)
- Übertragen des Antriebmoments um die Achse der Hauptwelle (1)
- Aufnahme der axialen Kräfte (F1) und radialen Kräfte (F2 und F3) aus auftretenden Windlasten und Rotorgewicht
Der Erfindung lag die ursprüngliche Idee zugrunde statt eines kompletten an sich bekannten aus mehreren elastischen Schichten aufgebauten Konuslagers, mehrere Lager, die aus Einzelteilen eines großen Konuslagers hervorgehen, zu verwenden. Dadurch ist ein solches Lager einfacher herzustellen, da weniger Gummivolumen für im Vulkanisierprozess benötigt wird. Durch das geringere Gewicht und die kleineren Abmessungen ist die Handhabung der Einzelteile besser. Die Einzelteile lassen sich nun einfacher und mit einem Bruchteil der Kraft im Vergleich zu dem kompletten großen Konuslager vorspannen. Der Austausch ist einfacher da die Teile sich einzeln herausnehmen und ersetzen lassen ohne den Rotor(5) und Rotornabe(8) komplette demontieren zu müssen. Mit den Einzelteilen ergeben sich Kosteneinsparungen, z.B. durch kleinere Bleche, einfachere Herstellung und geringere Gummivolumen.

Es hat sich nun gezeigt, dass man sogar die Konussegmente eines ursprünglich großen aus mehreren elastischen und unelastischen Schichten aufgebauten Konuslagers durch entsprechend geformte elastische Elemente ersetzen kann, bei denen die elastische und nicht-elastische Schichten selbst nicht konusförmig sind sondern eben bzw. flach. Durch eine einfache Teilung des kompletten Konuslagers verringert sich aber die Lebensdauer der Einzelteile. Um die Lebensdauer wieder zu erhöhen, werden nun erfindungsgemäß diese Einzelteile als runde Schichtfedern ausgeführt. Runde Schichtfedern haben niedrigere Dehnungen als rechteckige Federn und haben eine mehr als doppelte Lebensdauer. Die somit flachen und vorzugsweise runden Schichtfedern müssen nun erfindungsgemäß in eine nunmehr notwendig gewordene veränderte Geometrie im Rotor-Hauptwellenbereich untergebracht werden, als im Vergleich ein Standard-Konuslager mit kounusförmigen Schichten.

In einer besonderen Ausführungsform weisen die einzelnen elastischen (und unelastischen) vorzugsweise runden Schichten der Schichtfeder unterschiedliche Größe auf, und bilden somit zusammengefügt eine konusförmige Schichtfeder,.

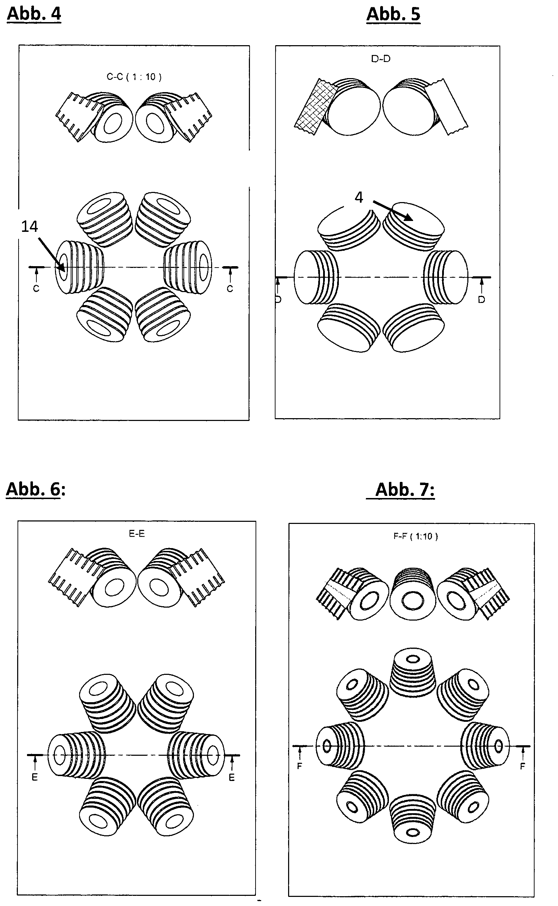

In weiteren Ausführungsformen der im erfindungsgemäßen Pendellager eingesetzten Schichtfedern mit verbesserter Lebensdauer können diese in weiteren verschieden Formen ausgeführt werden. Überraschenderweise hat sich gezeigt, dass entsprechende Schichtfedern eine zwei- bis vier-fache Lebenserwartung im Vergleich zu runden, zylindrisch aufgebauten Schichtfedern besitzen (bei der beschriebenen Nutzung in den erfindungsgemäßen Pendellagern), wenn sie eine elliptische Grundform aufweisen. Die oben beschriebenen konisch geformten Schichtfedern (aus runden flachen Schichten) zeigen innerhalb der erfindungsgemäßen Pendellager eine erhöhte Lebensdauer gegenüber den zylindrisch runden Schichtfedern aber eine geringere Lebensdauer gegenüber den Schichtfedern mit elliptischer Grundform. Die einzelnen Schichtfedertypen, welche in den erfindungsgemäßen Pendellagern zur Verwendung kommen können, sind in den Abbildungen 4 - 7 dargestellt.

Die erfindungsgemäßen Pendellager basieren auf den oben beschriebenen an sich bekannten Typen von Schichtfedern. Es können auch innovative Schichtfedern, wie beispielsweise in der WO 2011/088965 eingesetzt werden. Die erfindungsgemäßen Pendellager erzielen jedoch ihre Überlegenheit aus diesen Schichtfedern in Verbindung mit der speziellen Geometrie der konstruktiven funktionellen Elemente im Bereich des Rotors der Windkraftanlage.

Gegenstand der Erfindung ist demnach ein Pendellager (9) umfassend ein Innenbuchse (10), welche die Pendelachse oder die Welle (3) für das Pendellager aufzunehmen vermag, sowie eine sie umschließende Außenbuchse (11), welche mit der Innenbuchse (10) verbunden ist und verspannbare elastische Elemente (4) in Form von Schichtfedern enthält, die aus flachen elastischen Schichten und flachen unelastischen Zwischenschichten aufgebaut sind, wobei als elastische Elemente mindestens vier, vorzugsweise vier bis acht Schichtfedern (4) mit runder oder elliptischer Grundform dienen. Dabei sind besagte elastische Elemente (4) im Inneren der Außenbuchse (11) radial um die Innenbuchse (10) verteilt angeordnet und weisen Spannvorrichtungen (12) auf, welche die Außen- und Innenbuchse über die Schichtfedern (4) miteinander verspannen. Durch das Verspannen kann somit die Dicke der elastischen Schichtfedern und somit die Vorspannung auf die jeweiligen Bereiche der Innenbuchse und damit der Pendelwelle unabhängig voneinander eingestellt und verändert werden.

Gegenstand der Erfindung ist insbesondere auch ein entsprechendes Pendellager, bei dem die besagten Schichtfedern (4) konusförmig sind, wobei in einer besonders geeignet Ausführungsform die breiteren Konusflächen der Schichtfedern (4) in Richtung der die Pendelwelle (3) führenden Innenbuchse, und die schmaleren Konusflächen nach außen weisen. Die konusförmigen Schichtfedern in Verwendung innerhalb der erfindungsgemäßen Lager sind als guter Kompromiss zu sehen zwischen ausreichend hoher Lebensdauer und wirtschaftlich akzeptablen Herstellungskosten.

Gegenstand der Erfindung ist insbesondere ein entsprechendes Pendellager bei dem die besagten Schichtfedern (4) zylindrisch ellipsoid sind, da hier, wie bereits geschildert, diese in Verbindung mit ihrer speziellen Anordnung in dem erfindungsgemäßen Pendellager sich überraschenderweise als besonders widerstandsfähig gegenüber Abnutzung durch die in der Regel doch großen auf das Lager einwirkenden Kräfte zeigen. Diese Schichtfedern erweisen sich also als besonders langlebig bei Verwendung in den erfindungsgemäßen Lagern, sind jedoch aufwendiger und damit mit höheren Kosten herzustellen.

Gegenstand der Erfindung ist aber ein entsprechendes Pendellager, welches zylindrisch runde Schichtfedern (4) aufweist, da diese sehr einfach und kostengünstig herzustellen sind. In Anlagen, in denen nicht allzu große ungleiche Massenträgheitsmomente auftreten, sind solche Lager das Mittel der Wahl.

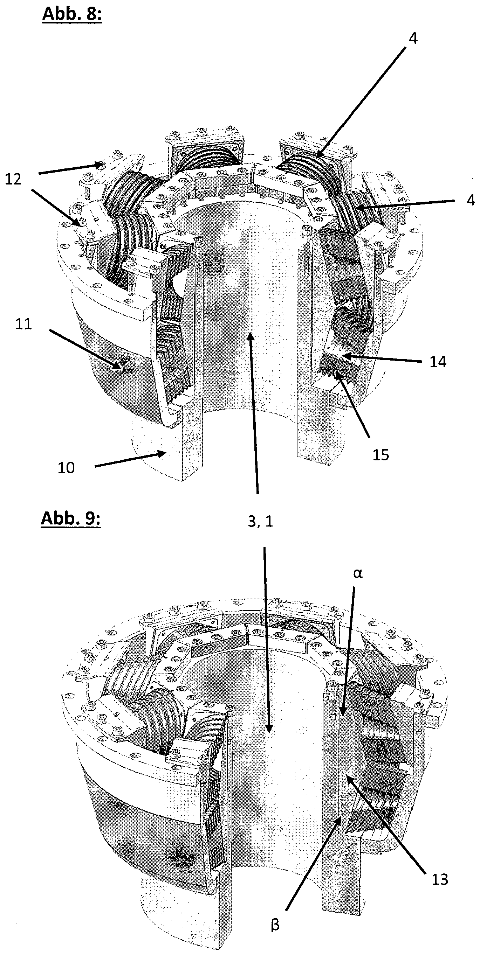

Die Schichtfederelemente (4) sind erfindungsgemäß mit Spannvorrichtungen (12) versehen, welche es ermöglichen, dass die Schichtfedern zwischen Außenbuchse (11) und Innenbuchse (10) verspannt werden können, wodurch auch eine einstellbare Vorspannung erreicht wird. Vorzugsweise sind die Spannvorrichtungen - in der Regel sind dies Verschraubungen oder Klemmhalterungen - aufgrund der notwendigen geometrischen Anordnung an den beiden Basisflächen der Schichtfedern (4) angebracht. Es sind aber auch andere Befestigungen oder Verspannungsvorrichtungen auch an anderen Positionen im erfindungsgemäßen Pendellager möglich. Abb. 8 und 9 zeigen eine Ausführungsform des erfindungsgemäßen Pendellagers (9) im ungespannten (Abb. 8) und vorgespannten (Abb. 9) Zustand. Gegenstand der Erfindung ist somit ein entsprechendes Pendellager, bei dem jede Schichtfeder an beiden Stirnflächen oder Basisflächen mit Spannvorrichtungsteilen (12) versehen sind, die passgenau zwischen Innenwand der Außenbuchse (11) und Außenwand der die Pendelachse (3) führenden Innenbuchse (10) angeordnet sind.

Mit den genannten Schichtfedern lässt sich auch der Anstellwinkel des elastomeren Elementes (4) Winkel gegenüber der Pendelachse ändern, wodurch Einfluss auf die axialer und radiale Steifigkeit des Elementes und somit des gesamten Pendellagers genommen werden kann. Die Änderung des Anstellwinkels gegenüber der Pendellachse kann beispielsweise über entsprechende Winkelstücke (13) erfolgen. Hierdurch oder durch andere Maßnahmen kann der Winkel (α, β) zwischen Schichtfederelement (4) und der Pendelachse von 0° bis 45°, vorzugsweise zwischen 0° und 30° beliebig eingestellt werden.

Durch die Möglichkeit, einzelne Elastomerelemente oder Gruppen von Elastomerelemente nicht nur individuell vorzuspannen, sondern auch in Bezug auf die Neigung zur Pendelachse (3) individuell einzustellen, erhält das erfindungsgemäße Pendellager Eigenschaften, die mit der Beschaffenheit der Anlage, dem Standort und den dort herrschenden Windbedingen in flexibler Weise abgestimmt werden können. Insbesondere können dadurch auch gezielte Änderungen der Rotorblattwinkel erreicht werden.

Hierzu zählt nicht nur die Möglichkeit die Steifigkeit des Pendellagers mechanisch durch die besagten Spannvorrichtungen individuell zu regulieren, sondern nach erfolgter mechanisch eingestellter Vorspannung auch durch hydraulische Mitte in reversibler Weise zu beeinflussen. Dazu weisen ein oder mehrere oder sämtliche Schichtfederelemente (4) des erfindungsgemäßen Pendellagers ein Hydraulikelement (14) auf, in das ein komprimierbares Gas oder eine hydraulische Flüssigkeit eingepresst werden kann, so dass hierdurch die Steifigkeit des Lagers oder in Teilen des Lagers erhöht oder gegebenenfalls verringert werden kann. In einer Ausführungsform ist das Hydraulikelement (14) ein Hohlvolumen im Kern der Schichtfeder (4), welches unterschiedlich groß sein kann. Alle bisher genannten Schichtfedertypen können somit als hydraulische Schichtfedern (4) ausgeführt werden. Dadurch ist es möglich eine aktive Blattverstellung in die erfindungsgemäßen Pendellager zu integrieren. Die Hydraulikelemente (14) sind mit Hydraulikleitungen(6) verbunden und werden mit einer zwischengeschalteten Hydraulikpumpe (7) gesteuert. Um eine Verdrehung der Rotorblätter mithilfe der Hydraulik-Elemente durchzuführen wird die Flüssigkeit von einer Feder (4) in die andere gepumpt, dadurch wird eine Feder (4) vom Volumen her größer und die andere kleiner. Statt einer Hydraulikpumpe (7) können auch Schubzylinder, welche eine oder mehrere Federn belasten, zum Verstellen verwendet werden. Die hydraulische Blattverstellung dreht die komplette Rotornabe(8) und damit das ein Rotorblatt (5) in den Wind und das andere (bei einer Zweiblattrotor-Anlage) aus dem Wind. Mit dieser Verstellung können die Lasten durch ungünstigen Windverhältnissen noch weiter verringert werden. Dafür wird nur ein relativ kleiner Winkel (α, β) benötigt.

Gegenstand der Erfindung ist somit ein entsprechendes Pendellager, bei dem mindestens eine Schichtfeder (4) ein Hydraulikelement (14) aufweist, in das ein Gas oder eine Flüssigkeit durch eine hydraulische Vorrichtungen (6, 7) und Mittel ein- oder ausgepresst wird, wodurch gezielt die Steifigkeit des Lagers und damit die Verstellung der Rotorblätter (5) oder das Massenträgheitsmoment auf die Anlage verändert werden kann. Vorzugsweise ist das Hydraulikelement (14) ein Hohlvolumen, so dass die entsprechenden elastischen Schichtelemente (4) als Hohlgummifedern ausgeführt sind, welche einfach herzustellen und überdies relative weich sind.

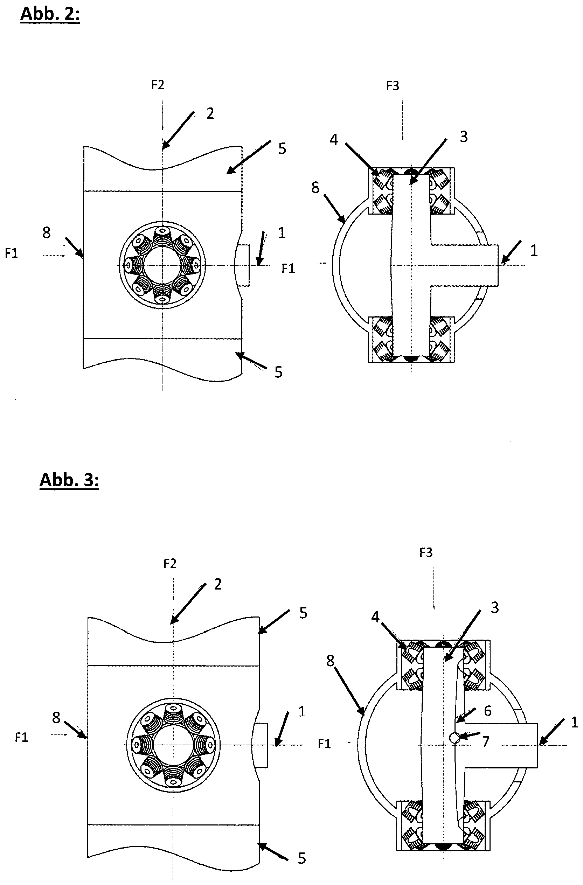

Das erfindungsgemäße Pendellager wird, wie bereits erwähnt, im Bereich des Rotors, der Rotornabe bzw. der Hauptwelle angebracht entsprechend der konstruktiven Ausgestaltungen und Gegebenheiten der jeweiligen Anlage. Gemäß der Erfindung werden für eine Anlage mindestens ein, vorzugsweise aber mindestens zwei der erfindungsgemäßen Pendellager, vorzugsweise im Bereich der Rotornabe, beziehungsweise als integraler Bestandteil der selbigen eingesetzt. Abb. 2 und Abb. 3 zeigen eine entsprechende Anordnung von zwei funktionell zusammenarbeitenden Pendellagern gemäß der Erfindung in ihrer konstruktiven Umgebung zur Hauptantriebswelle (1) und zum Rotornabenelement (8), wobei die Hauptwelle (1) an ihrer Spitze mit der senkrecht zu ihr angeordnete Pendelwelle (3) verbunden ist, die je ein erfindungsgemäßes Pendellager (9) an ihren beiden gegenüber liegenden Enden aufweist und im Rotornabenelement (8) eingebaut bzw. integraler Bestandteil desselben ist. Die Abbildungen stellen die mögliche Konstruktion für eine Zweiblattrotoranlage dar.

Gegenstand ist somit ein entsprechendes Pendellager, bei dem die Innenbuchse (10) von mindestens einem endständigen Bereich der Welle (3) gebildet wird, welcher mit der Außenbuchse (11) über besagte Schichtelemente (4) verbunden ist. Die Innenbuchse ist somit als integraler Bestandteil der Pendelwelle (3) zu betrachten, welche die Funktion der Innenbuchse übernimmt. Pendelwelle (3) und Hauptwelle (1) bilden in diesem Fall ein T-Stück, an dessen zwei Enden das Pendellager (9) befestigt ist. Alternativ kann die Innenbuchse (10) auch separat auf die Welle (3) endständig (vorzugsweise beidseitig) geschoben und befestigt werden.

Gegenstand ist aber auch ein entsprechendes Pendellager, bei dem die Innenbuchse (10) von dem endständigen Bereich der Hauptwelle (1) gebildet wird, welcher mit der Außenbuchse (11) über besagte Schichtelemente (4) verbunden ist. Die Innenbuchse ist somit als integraler Bestandteil der Hauptwelle (1) zu betrachten, welche die Funktion der Innenbuchse übernimmt. Der Einsatz eines T-Stückes, wie oben beschrieben entfällt somit. Alternativ kann die Innenbuchse (10) auch separat auf die Welle (1) endständig geschoben und befestigt werden. Die Außenbuchse (11) kann in diesem Fall durch die Rotornabe gebildet werden.

Somit ist ebenfalls Gegenstand der Erfindung eine Rotornabe (8) vorzugsweise für einen Ein-, Zwei- oder ggf. Dreiblatt-Rotor in einer Windkraftanlage, welche neben den Vorrichtungen zur Befestigung für die eins, zwei (oder mehr) Rotorblätter, eine Pendelwelle (3) aufweist, an deren mindestens einem Enden ein Pendellager (9) wie oben und in den Ansprüchen spezifiziert, angebracht ist und direkte oder indirekte Anschluss- und Befestigungsmöglichkeiten für die Hauptantriebswelle (1) des Rotors besitzt, wobei das oder die Pendellager konstruktiv mit der Rotornabe (8) oder deren Trägerteil (Gehäuse) fest verbunden oder in diese integriert sind. Die erfindungsgemäße Rotornabe (8) umfasst insbesondere ein Pendellager, wie oben und unten beschrieben, Befestigungsvorrichtungen für die Rotorblätter, sowie Befestigungsvorrichtungen für die Welle (3) oder die Welle (1).

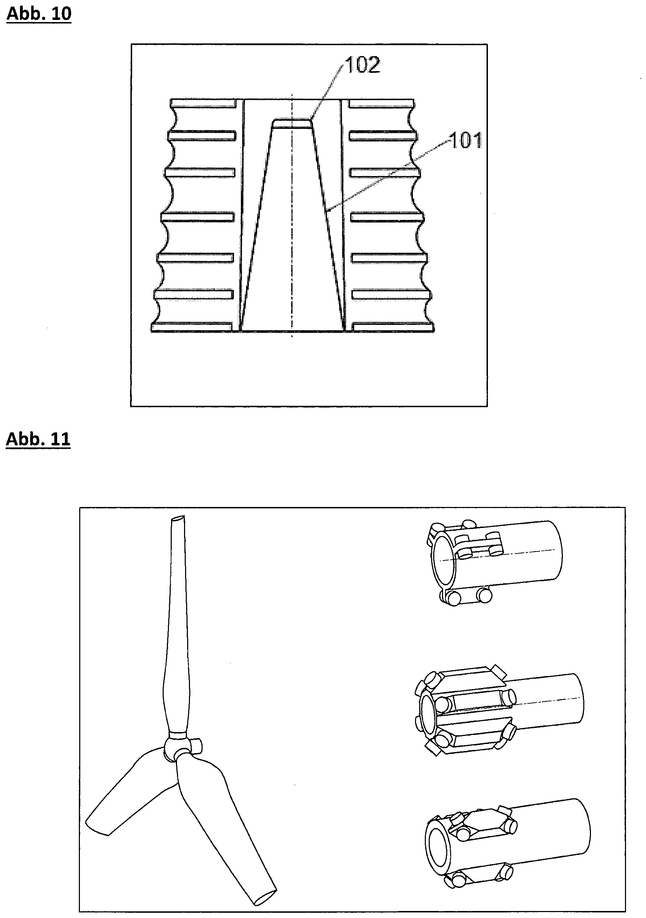

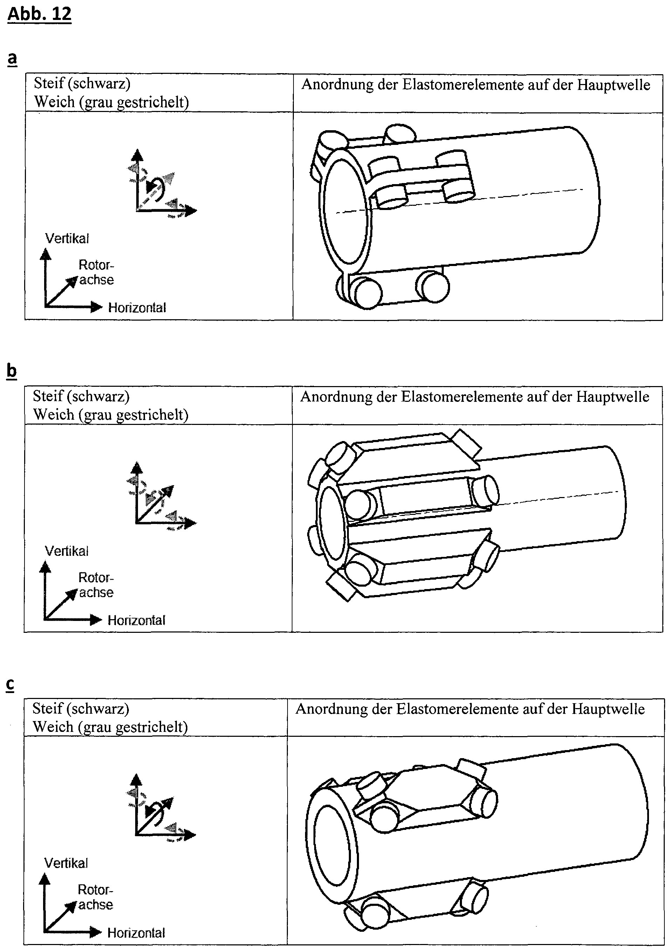

Bei einer Dreiblattrotoranlage ist die Anordnung der erfindungsgemäßen Pendellager entsprechend angepasst vorzunehmen. Erfindungsgemäße Ausführungsformen sind in Abb. 11 und 12 beschrieben.

Die erfindungsgemäßen Pendellager sind, wie bereits erläutert, in hervorragender Weise geeignet, eine Verminderung, Beseitigung und Steuerung von insbesondere unerwünschten ungleichen Massenträgheitsmomenten zu erreichen, die windbedingt von den Rotorblättern (5) auf den Turm einer Windkraftanlage übertragen werden. Auch lässt sich mit ihnen gezielt die Verstellung einzelner oder aller Rotorblätter durchführen.

Die erfindungsgemäßen Pendellager sind ferner aber auch für den Einsatz bei Kupplungen in Maschinen, oder bei Triebsträngen für Hubschrauber und Schiffsantrieben in Verbindung mit Rotor- und Schiffsschraubenvorrichtungen.

Gegenstand der Erfindung ist somit die Verwendung eines entsprechenden Pendellagers (9) zur Verminderung, Beseitigung und Steuerung von Massenträgheitsmomenten, die von den Rotorblättern (5) beispielsweise auf den Turm einer Zweiblattrotor- oder Dreiblattrotor-Windkraftanlage, vorzugsweise einer Zweiblattrotor-Anlage übertragen werden, sowie zur Verstellung von Rotorblättern (5) einer entsprechenden Windkraftanlage, wobei mindestens zwei solcher Lager im Bereich der Rotornabe (8) angeordnet sind.

Gegenstand der Erfindung ist auch die Verwendung eines entsprechenden Pendellagers zur Verstellung von Rotorblättern oder zur Verminderung, Beseitigung und Steuerung von Massenträgheitsmomenten, die von den Rotorblättern einer Ein-, Zwei- oder Mehrblattwindkraftanlage oder eines Hubschraubers oder einer Schiffsschraube übertragen werden.

Es kann die Notwendigkeit bestehen in Extremsituationen die Verformung der Elastomerelemente (4) zu begrenzen. Zur Begrenzung der maximalen axialen und radialen Verformung des Elastomerelements (4), kann im Inneren ein Metallanschlag (101) eingebaut werden (Abb. 10). Ab einer bestimmten radialen Verformung berührt die innerer Oberfläche der Elastomerschichten den Metallanschlag(101). Sobald eine Elastomerschicht den Metallanschlag (101) berührt, wird diese sehr viel steifer, was die gewünschte Begrenzung der radialen Verformung zur Folge hat. Durch die konische Ausführung des Metallanschlages (101) kommen die einzelnen Elastomerschichten erst nacheinander in Kontakt. Dadurch steigt die radiale Steifigkeit des gesamten Elastomerelements (4) mit zunehmender radialer Verformung langsamer und es kommt zu keinem sprunghaften Anstieg. Ab einer gewissen axialen Verformung kommt das Elastomerelement (4) mit dem oberen Teil des Metallanschlags (101) in Kontakt. Dadurch steigt die axiale Steifigkeit des Elastomerelements (4). Um einen sprunghaften Anstieg der axialen Steifigkeit zu vermeiden ist am oberen Teil des Metallanschlags (101) eine Pufferschicht (102) vorgesehen. Mit zunehmender axialer Verformung federt die obere Pufferschicht (102) ein und wir steifer, was zu der gewünschten Begrenzung der axialen Verformung führt. Gegenstand der Erfindung ist somit auch ein entsprechendes Pendellager, welches eines oder mehrere Schichtfederelemente (4) aufweist, die in ihrem Inneren, ggf. hohlen Inneren einen festen Anschlag in Form eines Zylinders oder Konuskörpers aufweisen, der vorzugsweise senkrecht zu den Schichten angeordnet ist. Ebenso ist es möglich den kompletten Metallanschlag(101) mit einer geschlossenen dicken Elastomerschicht zu überziehen.

Der Anschlag zur Begrenzung der radialen Verformung kann auch durch mindestens zwei hydraulische Elastomerelemente, welche radial zu den Elastomerelementen(4) des Pendellagers (9) wirken, ermöglicht werden. Die Elemente wirken tangential in Umfangsrichtung des Pendellager (9) (siehe Abb.:15). Das innere hydraulische Volumen(105) des hydraulischen Elastomerelements kann, wie in der Abb. 15 dargestellt, mit einem Überdruckventil (103) an einen Druckspeicher (104) verbunden. Im Fall einer sehr großen Verdrehung des Pendellagers (9) um die Pendellagerachse (3) federt das hydraulische Elastomerelement ein. Die äußere Verformung lässt den Druck in dem inneren hydraulischen Volumen (105) soweit steigen bis sich das Überdruckventil(103) öffnet. Bei einer weiteren Verformung fließt die Flüssigkeit durch das nun geöffnete Überdruckventil(103) in den Druckspeicher (104). Der Druck in der Flüssigkeit kann nun nicht mehr ansteigen, da die Flüssigkeit in den Druckspeicher (104) entweicht. Dadurch steigt die Federkraft mit weiterer Verformung nur gering an. Ab einer gewissen Verformung ist der Druckspeicher (104) mit komplett mit Flüssigkeit gefüllt und die Kennlinie wird wieder progressiv, da die Flüssigkeit aus dem hydraulischen Elastomerlement (4) nicht mehr in den Druckspeicher (104) fließen kann. Durch diese lange flache Kraft-Weg-Kennlinie wird die mögliche Anschlagskraft auch bei großer Verformung begrenzt. Was einen positiven Effekt auf alle Anschlussteile hat, da diese kleiner dimensioniert werden können.

Weitere Ausführungsformen der Erfindung zeigt die Abb. 12 (a - c) Die erste Möglichkeit der Anordnung besteht in einer Art Klauenkupplung. In dieser Anordnung werden bei Nick- und Gierdrehungen die Elastomerelemente (4) auf Schub belastet und reagieren somit sehr weich. Durch diese Elastizität werden die Biegemomente aus Nick- und Gierdrehungen reduziert. In Rotationsrichtung zur Drehachse des Hauptwelle (1) werden die Elastomerelemente (4) auf Druck belastet und reagieren steif. In horizontaler und vertikaler Richtung (beides radial zur Hauptwelle (1)) ist die Anordnung steif, während in Richtung Hauptwelle(1) die Anordnung weich ist.

Die Elastomerelemente (4) lassen sich auch kugelförmig anordnen. Das führt dazu das alle radialen und axialen Verformungen des Pendellagers(9) steif sind, während alle Verdrehrichtungen (Nick-, Gier- und Rotordrehung) weich sind. Diese Anordnung ähnelt einem klassischen Kugelgelenk. Positiv ist, das die Nick- und Gierbewegung weich sind. Nicht positiv ist, das die Drehrichtung um die Hauptwelle (1) ebenfalls weich ist.

Eine Kombination aus beiden zuvor genannten Anordnungen ist in Abb.:12c dargestellt. Hier sind die Elastomerelemente (4) so ausgerichtet, das sie bei Nick- und Gierbewegungen auf Schub belastet werden, sodass diese weich reagieren. In den sonstigen Richtungen werden die Elastomerelemente hauptsächlich auf Druck belastet und reagieren steifer. Das gilt auch für die Drehung um die Hauptwelle (1), die nun ebenfalls steif ist. Diese Anordnung ist ideal und vereint die Vorteile der beiden vorherigen Anordnungen.

Die oben gezeigten Anordnungen 12 (a - c) können nicht nur in Bezug auf die Hauptwelle (1) eingesetzt werden, sondern lassen sich auch prinzipiell auf die Pendelwelle (3) anwenden, welche als T-förmiges Teil mit der Hauptwelle (1) verbunden ist.

Abb.:13 zeigt beispielhaft die Anwendung des Pendellagers (9) in einer Windkraftanlage mit nur einem Rotorblatt (5). Um die Unwucht zu reduzieren hat eine solche Windkraftanlage immer ein Gegengewicht (106). Durch die ungleichmäßige Windkraft, zwischen Rotorblatt (5) und Gegengewicht (106), kommt es bei einer starren Verbindung von Rotor und Gondel zu sehr hohen dynamischen Biegemomenten. Wie auch beim Zweiblatt-Rotor ist es auch hier erforderlich, das Rotorblatt (5) pendeln zu lassen, um die Biegemomente zu reduzieren. Das Pendellager (9) und die Elastomerelemente (4), sind dabei gleich aufgebaut wie bei einem Zwei-Blatt-Rotor.

Das erfindungsgemäße Pendellager kann auch als Kupplung in anderen Maschinen eingesetzt werden, insbesondere dann wenn eine axiale Last und ein Drehmoment mit hoher Steifigkeit übertragen werden muss, bei gleichzeitiger kardanische Weichheit mit großen kardanischen Schiefstellungen. Dies ist nicht nur der Fall bei Windkraftanlagen, sondern auch zum Beispiel im Antriebsstrang von Schiffen oder Hubschraubern.

Die Durchmesser und Dicken der einzelnen Schichten einer Einzelfeder (4) können gleich oder unterschiedlich von Schicht zu Schicht sein. Je nach Belastungsart kann man durch unterschiedliche Schichten dafür sorgen das jede Schicht etwa die gleiche Lebensdauer hat. So wird gewährleistet das die Federn die maximale Lebensdauer erreicht ohne das eine Schicht überlastet und eine andere Schicht kaum belastet wird. Die Schichtfedern (4) des erfindungsgemäßen Pendellagers (9) bestehen im Wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore A, insbesondere 30 bis 80 Shore A verwendet. Die Herstellung derartiger Elastomere unterschiedlicher Härte ist im Stand der Technik bekannt und in der einschlägigen Literatur hinreichend beschrieben. Vorzugsweise werden handelsübliche Naturkautschuke oder Kunststoffe eingesetzt. Die nicht-elastomeren Schichten sind vorzugsweise Zwischenplatten aus weitestgehend unelastischen Werkstoffen mit geringer Kompressibilität. Vorzugsweise sind dies Metallbleche, aber auch andere Materialien, wie harte Kunststoffe, Verbundwerkstoffe oder karbonfaserhaltige Werkstoffe sind einsetzbar.

### Kurze Beschreibung der verwendeten Bezugsgrößen und der Abbildungen

(1) Hauptwelle
(2) Achse Rotorblatt /
(3) Achse Pendellager / Welle für Pendellager
(4) (hydraulisches) Elastomerelement
(5) Rotorblatt
(6) Hydraulikleitungen
(7) Hydraulikpumpe
(8) Rotornabe
(9) Pendellager
(10) Innenbuchse
(11) Außenbuchse
(12) Spannvorrichtungselemente
(13) Winkelteil
(14) Hydraulikelement / Hohlvolumen im Inneren des Schichtfederelementes (4)
(15) Hohlgummischichtfeder
α, β Winkel des Winkelelementes (13) zur Pendelachse (3)
101 Metallanschlag
102 Gummipuffer
103 Überdruckventil
104 Druckspeicher
105 Hydraulische Volumen
106 Gegengewicht

Abb. 1: zeigt mögliche Windeinwirkungskräfte auf den Zweiblattrotor einer Windkraftanlage.
Abb. 2: zeigt den Einsatz von erfindungsgemäßen Pendellagern im Bereich der Rotornabe / Hauptwelle eine Zweiblattrotor-Windkraftanlage (Draufsicht und Querschnitt) ohne zusätzliche Hydraulikvorrichtungen.
Abb. 3: zeigt den Einsatz von erfindungsgemäßen Pendellagern im Bereich der Rotornabe / Hauptwelle eine Zweiblattrotor-Windkraftanlage (Draufsicht und Querschnitt) mit zusätzlichen Hydraulikvorrichtungen.
Abb. 4 - 7: zeigen diverse geeignete Schichtfedern (4) und ihre Anordnung in den erfindungsgemäßen Pendellagern (9)
Abb. 8: zeigt in 3-D Darstellung eine Ausführungsform eines erfindungsgemäßen Pendellagers, in dem die Schichtfederelemente (4) mit Spannvorrichtungen versehen sind, vor Einspannung in das Lagergehäuse.
Abb. 9: zeigt in 3-D Darstellung eine Ausführungsform eines erfindungsgemäßen Pendellagers, in dem die Schichtfederelemente (4) mit Spannvorrichtungen versehen sind, nach Einspannung in das Lagergehäuse und somit durchgeführter Vorspannung.
Abb. 10: zeigt eine Ausführungsform eines Innenanschlags eines Schichtelementes (4)
Abb. 11: zeigt die Anwendung des erfindungsgemäßen Pendellagers in einer Windkraftanlage mit drei Rotorblättern, wobei das Pendellager hier auf der Hauptwelle (1) angebracht ist.
Abb. 12: zeigt mögliche Anordnungen (a - c) der Schichtfederelemente (4) des erfindungsgemäßen Pendellagers auf der Hauptwelle (1) (einer Windkraftanlage).

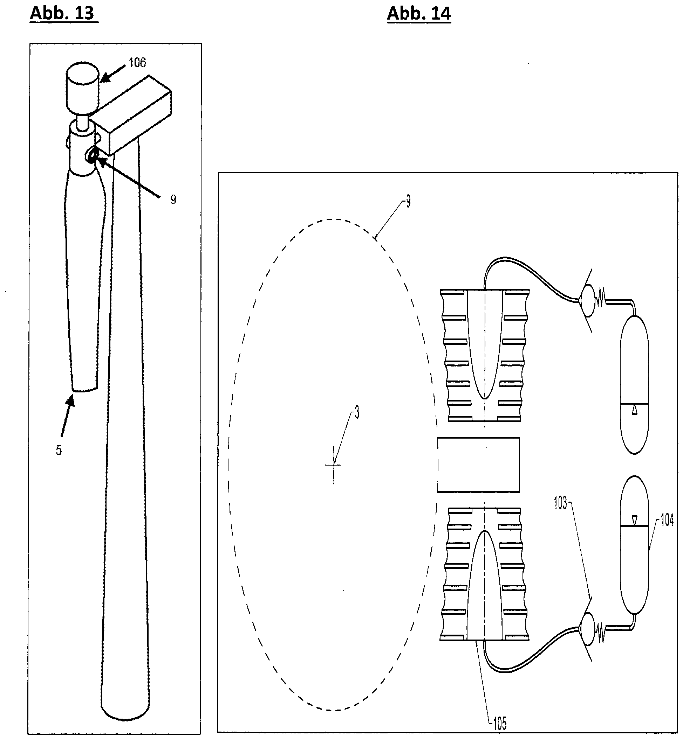

Abb. 13: zeigt die Anordnung eines erfindungsgemäßen Pendellagers in einer 1-Blatt- Windkraftanlage.
Abb. 14: zeigt eine erfindungsgemäße Schichtfederelemente-Anordnung (4) mit Hohlraum, welcher hydraulisch ggf. über einen Druckspeicher befüllt werden kann.

## Patentansprüche

1. Pendellager (9) umfassend ein Innenbuchse (10), welche die Welle bzw. Pendelachse (3) oder die Hauptwelle (1) für das Pendellager aufzunehmen vermag, sowie eine sie umschließende Außenbuchse (11), welche mit der Innenbuchse verbunden ist und verspannbare elastische Elemente (4) enthält, die aus elastischen Schichten und unelastischen Zwischenschichten aufgebaut sind, wobei als elastische Elemente mindestens vier Schichtfedern (4) dienen mit runder oder elliptischer Grundform, wobei die elastischen Elemente (4) im Inneren der Außenbuchse radial um die Innenbuchse verteilt angeordnet sind und Spannvorrichtungen (12) aufweisen, so dass dadurch Dicke der elastischen Schichtfedern und somit die Vorspannung auf die jeweiligen Bereiche der Innenbuchse und damit der Pendelwelle unabhängig voneinander einstellbar und veränderbar ist,
**dadurch gekennzeichnet, dass** mindestens vier bis acht Schichtfedern (4) in einer ersten zur Pendelachse (3) oder Hauptwelle (1) senkrechten Ebene und mindestens vier bis acht Schichtfedern in einer zweiten zur Achse (3) oder (1) senkrechten Ebene gleichmäßig verteilt um die innere die Pendelwelle (3) führende Buchse (10) angeordnet sind, wobei die Schichtfedern auf Winkelelementen (13), die einen Winkel (α, β) zur Pendelachse (3) bilden, angeordnet sind, so dass hierdurch bei Verspannung der elastischen Elemente axiale und radial Steifigkeit unterschiedlich einstellbar sind.

2. Pendellager nach Anspruch 1, **dadurch gekennzeichnet, dass** die Schichtfedern (4) konusförmig sind.

3. Pendellager nach Anspruch 2, **dadurch gekennzeichnet, dass** die die breitere Konusfläche der Schichtfedern (4) in Richtung der die Pendelwelle (3) führenden Innenbuchse weist.

4. Pendellager nach Anspruch 1, **dadurch gekennzeichnet, dass** die Schichtfedern (4) zylindrisch ellipsoid sind.

5. Pendellager nach Anspruch 1, **dadurch gekennzeichnet, dass** die Schichtfedern (4) zylindrisch rund sind.

6. Pendellager nach einem der Ansprüche 1 - 5, **dadurch gekennzeichnet, dass** jede Schichtfeder an beiden Stirnflächen mit Spannvorrichtungsteilen (12) versehen sind, die passgenau zwischen Innenwand der Außenbuchse (11) und Außenwand der die Pendelachse (3) führenden Innenbuchse (10) angeordnet sind.

7. Pendellager nach einem der Ansprüche 1 - 6, **dadurch gekennzeichnet, dass** die mindestens sechs bis acht Schichtfedern (4) einer Ebene einen Winkel α, ß zwischen 0 und 30° zur Pendelachse aufweisen.

8. Pendellager nach Anspruch 7, **dadurch gekennzeichnet, dass** die mindestens sechs bis acht Schichtfedern einer ersten Ebene einen Winkel α zwischen 0 und 30° und mindestens sechs bis acht Schichtfedern einer zweiten Ebene einen Winkel β zwischen 0 und 30° zur Pendelachse aufweisen.

9. Pendellager nach einem der Ansprüche 1 - 8, **dadurch gekennzeichnet, dass** die Innenbuchse (10) von mindestens einem endständigen Bereich der Welle (3) oder dem nach außen gerichteten endständigen Bereich der Hauptwelle (1) gebildet wird, welcher mit der Außenbuchse (11) über besagte Schichtelemente (4) verbunden ist.

10. Pendellager nach einem der Ansprüche 1 - 8, **dadurch gekennzeichnet, dass** die Innenbuchse (10) als separates Bauteil auf mindestens einen endständigen Bereich der Welle (3) oder an dem nach außen gerichteten endständigen Bereich der Hauptwelle (1) befestigt ist, welcher mit der Außenbuchse (11) über besagte Schichtelemente (4) verbunden ist.

11. Pendellager nach Anspruch 9 oder 10, **dadurch gekennzeichnet, dass** die Innenbuchse (10) von dem nach außen gerichteten endständigen Bereich der Hauptwelle (1) gebildet wird, oder an dem nach außen gerichteten endständigen Bereich der Hauptwelle (1) befestigt ist, und die Außenbuchse (11) durch die Rotornabe oder einen Teil der Rotornabe gebildet wird.

12. Pendellager nach einem der Ansprüche 1 - 11, **dadurch gekennzeichnet, dass** mindestens eine Schichtfeder (4) ein Hohlvolumen (14) aufweist.

13. Pendellager nach Anspruch 12, **dadurch gekennzeichnet, dass** in das Hohlvolumen (14) der mindestens eine Schichtfeder (4) ein Gas oder eine Flüssigkeit durch eine hydraulische Vorrichtung (6, 7) in ein oder mehrere oder alle Schichtfederelemente (4) ein- oder ausgepresst wird, wodurch gezielt die Steifigkeit des Lagers verändert werden kann.

14. Pendellager nach einem der Ansprüche 1 - 11, **dadurch gekennzeichnet, dass** mindestens eine Schichtfeder (4) im ihren Inneren einen festen Anschlag (101) in der Form eines Zylinders oder eines Konus entsprechend der äußeren Form des Schichtfederelementes (4) aufweist, um die potentielle Verformung der Schichtfeder zu begrenzen.

15. Verwendung eines Pendellagers gemäß der Ansprüche 1 - 14, zur Verstellung von Rotorblättern oder zur Verminderung, Beseitigung und Steuerung von Massenträgheitsmomenten, die von den Rotorblättern einer Ein-, Zwei- oder Mehrblattwindkraftanlage oder eines Hubschraubers oder einer Schiffsschraube übertragen werden.

16. Rotornabe (8) für einen Ein-, Zwei- oder Mehrblatt-Rotor umfassend ein Pendellager gemäß einem der Ansprüche 1 - 14, Befestigungsvorrichtungen für die Rotorblätter, sowie Befestigungsvorrichtungen für die Welle (3) oder die Welle (1).

17. Ein-, Zwei- oder Mehrblattwindkraftanlage enthaltend ein Pendellager (9) nach einen der Ansprüche 1 - 14 oder eine Rotornabe (8) nach Anspruch 16.

## Claims

1. Teeter bearing (9) comprising an inner bushing (10), which is able to accommodate the shaft or teeter axle (3) or the main shaft for the teeter bearing, and a surrounding outer bushing (11), which is connected to the inner bushing (10) and contains tensionable elastic elements (4) which are built up from elastic layers and non-elastic interlayers, where the elastic elements used are at least four multilayered springs (4) having a round or elliptical base shape, where the elastic elements (4) in the interior of the outer bushing (11) are arranged in a radial distribution around the inner bushing and have tensioning devices (12), enabling the thickness of the elastic multilayered springs and thus the pretensioning to be adjusted and changed to the respective regions of the inner bushing and thus of the teeter shaft independently of one another,
**characterised in that** at least four to eight multilayered springs (4) in a first plane perpendicular to the teeter axle (3) or main shaft (1) and at least four to eight multilayered springs in a second plane perpendicular to the axle (3) or (1) are uniformly distributed around the inner bushing (10) carrying the teeter shaft (3), where the multilayered springs are arranged on angle elements (13) which form an angle (α, β) to the teeter axle (3), enabling the axial and radial stiffness to be adjusted differently on tensioning of the elastic elements

2. Teeter bearing according to Claim 1, **characterised in that** the multilayered springs (4) are conical.

3. Teeter bearing according to Claim 2, **characterised in that** the broader cone surface of the multilayered springs (4) faces in the direction of the inner bushing carrying the teeter shaft (3).

4. Teeter bearing according to Claim 1, **characterised in that** the multilayered springs (4) are cylindrically ellipsoidal.

5. Teeter bearing according to Claim 1, **characterised in that** the multilayered springs (4) are cylindrically round.

6. Teeter bearing according to one of Claims 1 - 5, **characterised in that** each multilayered spring is provided on both faces with tensioning device parts (12) which are arranged with an accurate fit between the inside wall of the outer bushing (11) and the outside wall of the inner bushing (10) carrying the teeter axle (3).

7. Teeter bearing according to one of Claims 1 - 6, **characterised in that** the at least six to eight multilayered springs (4) of a plane have an angle α, β between 0 and 30° to the teeter axle.

8. Teeter bearing according to Claim 7, **characterised in that** the at least six to eight multilayered springs of a first plane have an angle α between 0 and 30° and at least six to eight multilayered springs of a second plane have an angle β between 0 and 30° to the teeter axle.

9. Teeter bearing according to one of Claims 1 - 8, **characterised in that** the inner bushing (10) is formed by at least one terminal region of the shaft (3) or the outwardly directed terminal region of the main shaft (1), this region being connected to the outer bushing (11) via said multilayered elements (4).

10. Teeter bearing according to one of Claims 1 - 8, **characterised in that** the inner bushing (10) is attached as separate component to at least one terminal region of the shaft (3) or to the outwardly directed terminal region of the main shaft (1), this region being connected to the outer bushing (11) via said multilayered elements (4).

11. Teeter bearing according to Claim 9 or 10, **characterised in that** the inner bushing (10) is formed by the outwardly directed terminal region of the main shaft (1), or is attached to the outwardly directed terminal region of the main shaft (1), and the outer bushing (11) is formed by the rotor hub or a part of the rotor hub.

12. Teeter bearing according to one of Claims 1 - 11, **characterised in that** at least one multilayered spring (4) has a hollow volume (14).

13. Teeter bearing according to Claim 12, **characterised in that** a gas or fluid is forced into or out of the hollow volume (14) of the at least one multilayered spring (4) by a hydraulic device (6, 7) in one or more or all multilayered spring elements (4), enabling the stiffness of the bearing to be changed specifically.

14. Teeter bearing according to one of Claims 1 - 11, **characterised in that** at least one multilayered spring (4) has in its interior a fixed stop (101) in the form of a cylinder or cone corresponding to the outer shape of the multilayered spring element (4) in order to limit the potential deformation of the multilayered spring.

15. Use of a teeter bearing according to Claims 1 - 14 for the adjustment of rotor blades or for the reduction, elimination and control of mass moments of inertia which are transmitted by the rotor blades of a one-, two- or multibladed wind turbine or of a helicopter or of a ship's propeller.

16. Rotor hub (8) for a one-, two- or multibladed rotor comprising a teeter bearing according to one of Claims 1 - 14, fixing devices for the rotor blades, and fixing devices for the shaft (3) or the shaft (1).

17. One-, two- or multibladed wind turbine containing a teeter bearing (9) according to one of Claims 1 - 14 or a rotor hub (8) according to Claim 16.

## Revendications

1. Palier oscillant (9) comprenant un manchon interne (10), lequel peut recevoir et loger l'axe ou l'arbre de basculement (3) ou l'arbre principal pour le palier oscillant, et un manchon externe d'entourage (11), lequel est connecté au manchon interne (10) et contient des éléments élastiques susceptibles d'être mis sous tension (4) qui sont constitués à partir de couches élastiques et d'inter-couches non élastiques, dans lequel les éléments élastiques qui sont utilisés sont au moins quatre ressorts à multiples couches (4) qui présentent une forme de base ronde ou elliptique, dans lequel les éléments élastiques (4) dans l'intérieur du manchon externe (11) sont agencés selon une distribution radiale autour du manchon interne et ils comportent des dispositifs de mise sous tension (12), ce qui permet de régler et de modifier l'épaisseur des ressorts à multiples couches élastiques et par conséquent la prétension au niveau de régions respectives du manchon interne et par conséquent de l'arbre de basculement de manière mutuellement indépendante,
**caractérisé en ce qu'**au moins quatre à huit ressorts à multiples couches (4) dans un premier plan qui est perpendiculaire à l'axe de basculement (3) ou à l'arbre principal (1) et au moins quatre à huit ressorts à multiples couches dans un second plan qui est perpendiculaire à l'axe (3) ou (1) sont distribués de façon uniforme autour du manchon interne (10) qui supporte l'arbre de basculement (3), dans lequel les ressorts à multiples couches sont agencés sur des éléments d'angle (13) qui forment un angle (α, β) par rapport à l'axe de basculement (3), ce qui permet de régler différemment les raideurs axiales et radiales lors de la mise sous tension des éléments élastiques.

2. Palier oscillant selon la revendication 1, **caractérisé en ce que** les ressorts à multiples couches (4) sont coniques.

3. Palier oscillant selon la revendication 2, **caractérisé en ce que** la surface conique plus large des ressorts à multiples couches (4) est orientée suivant la direction du manchon interne qui supporte l'arbre de basculement (3).

4. Palier oscillant selon la revendication 1, **caractérisé en ce que** les ressorts à multiples couches (4) sont ellipsoïdaux de façon cylindrique.

5. Palier oscillant selon la revendication 1, **caractérisé en ce que** les ressorts à multiples couches (4) sont ronds de façon cylindrique.

6. Palier oscillant selon l'une des revendications 1 - 5, **caractérisé en ce que** chaque ressort à multiples couches est muni sur les deux faces de parties de dispositif de mise sous tension (12) qui sont agencées selon un ajustement précis entre la paroi interne du manchon externe (11) et la paroi externe du manchon interne (10) qui supporte l'axe de basculement (3).

7. Palier oscillant selon l'une des revendications 1 - 6, **caractérisé en ce que** les au moins six à huit ressorts à multiples couches (4) d'un plan présentent un angle α, β entre 0 et 30° par rapport à l'axe de basculement.

8. Palier oscillant selon la revendication 7, **caractérisé en ce que** les au moins six à huit ressorts à multiples couches d'un premier plan présentent un angle α entre 0 et 30° et **en ce qu'**au moins six à huit ressorts à multiples couches d'un second plan présentent un angle β entre 0 et 30° par rapport à l'axe de basculement.

9. Palier oscillant selon l'une des revendications 1 - 8, **caractérisé en ce que** le manchon interne (10) est formé par au moins une région terminale de l'arbre (3) ou par la région terminale orientée vers l'extérieur de l'arbre principal (1), cette région étant connectée au manchon externe (11) via lesdits éléments à multiples couches (4).

10. Palier oscillant selon l'une des revendications 1 - 8, **caractérisé en ce que** le manchon interne (10) est lié en tant que composant séparé à au moins une région terminale de l'arbre (3) ou à la région terminale orientée vers l'extérieur de l'arbre principal (1), cette région étant connectée au manchon externe (11) via lesdits éléments à multiples couches (4).

11. Palier oscillant selon la revendication 9 ou 10, **caractérisé en ce que** le manchon interne (10) est formé par la région terminale orientée vers l'extérieur de l'arbre principal (1), ou est lié à la région terminale orientée vers l'extérieur de l'arbre principal (1), et le manchon externe (11) est formé par le moyeu de rotor ou par une partie du moyeu de rotor.

12. Palier oscillant selon l'une des revendications 1 - 11, **caractérisé en ce qu'**au moins un ressort à multiples couches (4) comporte un volume creux (14).

13. Palier oscillant selon la revendication 12, **caractérisé en ce qu'**un gaz ou un fluide est canalisé de manière forcée à l'intérieur ou en sortie du volume creux (14) de l'au moins un ressort à multiples couches (4) au moyen d'un dispositif hydraulique (6, 7) au niveau d'un ou de plusieurs des éléments de ressort à multiples couches ou de tous les éléments de ressort à multiples couches (4), ce qui permet de modifier de façon spécifique la raideur du palier.

14. Palier oscillant selon l'une des revendications 1 - 11, **caractérisé en ce qu'**au moins un ressort à multiples couches (4) comporte, au niveau de son intérieur, un moyen d'arrêt fixe (101) sous la forme d'un cylindre ou d'un cône qui correspond à la forme externe de l'élément de ressort à multiples couches (4) afin de limiter la déformation potentielle du ressort à multiples couches.

15. Utilisation d'un palier oscillant selon les revendications 1 - 14 pour le réglage de pales de rotor ou pour la réduction, l'élimination et le contrôle de moments d'inertie de masse qui sont transmis par les pales de rotor d'une éolienne à une seule pale, à deux pales ou à multiples pales ou d'un hélicoptère ou d'un moyen de propulsion de bateau.

16. Moyeu de rotor (8) pour un rotor à une seule pale, à deux pales ou à multiples pales qui comprend un palier oscillant selon l'une des revendications 1 - 14, des dispositifs de fixation pour les pales de rotor et des dispositifs de fixation pour l'arbre (3) ou pour l'arbre (1).

17. Éolienne à une seule pale, à deux pales ou à multiples pales contenant un palier oscillant (9) selon l'une des revendications 1 - 14 ou un moyeu de rotor (8) selon la revendication 16.
